# EUROPEAN PATENT SPECIFICATION

(11) **EP 0 930 002 B1**
(45) Date of publication and mention of the grant of the patent: **02.04.2003**
(21) Application number: 99200912.6
(22) Date of filing: 12.01.1995
(51) Int. Cl.: A01G 5/02

(54) **A device for bundling flowers**
Vorrichtung zum Bündeln von Blumen
Dispositif pour botteler des fleurs

(30) Priority: 14.01.1994 NL 9400067
(43) Date of publication of application: 21.07.1999
(62) Divisional of application: 95200065.1
(73) Proprietor: W.H.J. Janssen, 6049 AJ Herten (NL)
(72) Inventor: W.H.J. Janssen, 6049 AJ Herten (NL)
(74) Representative: Vollebregt, Cornelis Jacobus, Ir.

(56) References cited:
- EP-A- 0 449 386
- DE-B- 1 189 779
- NL-A- 7 310 250
- NL-A- 8 500 245
- US-A- 3 659 709
- US-A- 4 470 241
- US-A- 4 704 846

## Description

The invention relates to a device for bundling flowers, provided with means by which a number of flowers can be arranged in close relationship, and also with means for providing binding means around the flower stems so as to form a joined bunch of flowers.

The known devices usually utilize binding devices, by means of which a rubber band is wrapped around the flower stems. These rubber-handling binding devices are voluminous, however, as a result of which a great deal of space is required. Furthermore the tying mechanism of these known devices is sensitive to fouling by leaf remnants and the like, so that malfunctions occur quite frequently when binding devices of this type are used. Another drawback is the fact that the use of rubber has a polluting effect.

According to the invention the device is provided with supply means for supplying two binding strings and with a pair of carrier means for carrying along the string, which are capable of movement towards and away from each other and by means of which the two binding strings can be moved towards each other, whilst one of said carrier means supports a rotatable disc, which is provided with passages through which the binding string can be passed.

When using the construction according to the invention binding strings may be used, parts of which can be introduced into the passages provided in the rotatable disc, after which said parts of the binding string can be twisted together by rotation of the disc in order to obtain a firm interconnection between the strings and an adequate tying down of the strings around the flower stems, so as to hold the flowers together in a bunch. The binding mechanism thus realized may be of compact design.

Advantageously the device is provided with grab means for grabbing a bunch of flowers, said grab means being capable of pivoting movement, both about an at least substantially vertical axis and about an at least substantially horizontal axis. A bundled bunch of flowers, whose stems extend in vertical direction, can be grabbed by such grab means and be delivered horizontally onto for example a conveyor belt or the like, so that an even discharge of the bundled bunches of flowers can be effected in such manner as to spare the flowers.

The invention will be explained in more detail hereafter with reference to parts of the device according to the invention, which are diagrammatically illustrated in the accompanying Figures.

Figure 1 is a plan view of a part of a conveyor belt with supporting means for flowers coupled thereto.

Figure 2 is a side view of Figure 1.

Figure 3 is a plan view of the conveyor belt at the location of a pulley for the conveyor belt, near which means are provided for measuring the thickness as well as the length of the stem.

Figure 4 is a side view of Figure 3.

Figure 5 is a plan view of a part of the conveyor belt near a bundling station, where a conveyor belt moving in a substantially vertical plane and supporting fork-shaped means is disposed.

Figure 6 is a side view of an endless conveyor belt with fork-shaped means supported by the conveyor belt.

Figure 7 is a plan view of Figure 6.

Figure 8 is a diagrammatic view of one stage of the bunching of a number of flowers.

Figure 9 is a side view of Figure 8.

Figures 10 and 11 show two further stages of said bunching of a number of flowers.

Figure 12 is a view of a rotatable disc for twisting together two binding strings, with driving means for said disc.

Figure 13 shows the mechanism for supplying and moving together binding strings.

Figure 14 is a side view of Figure 13.

Figure 15 is a diagrammatic plan view of parts of Figure 13.

Figure 16 is a diagrammatic view of the parts shown in Figure 15, in the position they occupy during said bunching of a number of flowers.

Figure 17 is a view of some parts of the mechanism shown in Figure 13.

Figure 18 diagrammatically illustrates the grabbing of a bunched number of flowers by grab means.

Figure 19 is a diagrammatic plan view of the grab means, with means for adjusting said grab means.

Figure 20 is a plan view corresponding with Figure 19, in which the various parts occupy different positions.

Figure 21 is a side view of Figure 20.

Figure 22 is a diagrammatic view of the mechanism by which the grab means is pivotal both about a horizontal and about a vertical axis.

Figure 23 is a side view of Figure 22.

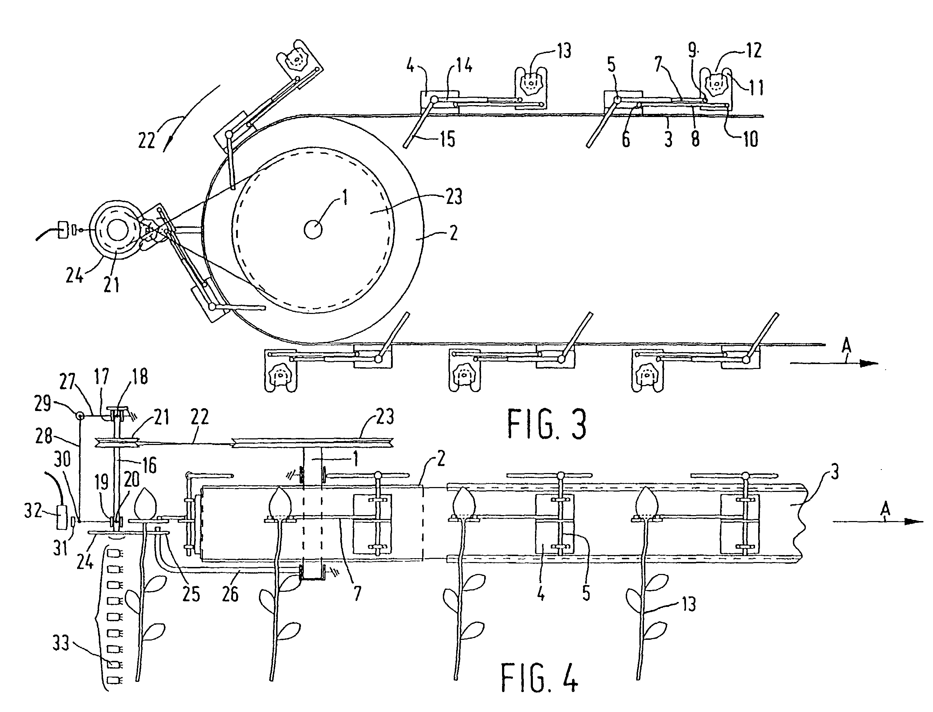

The device for sorting and bundling flowers comprises a frame (not shown), in which a few pulleys 2 are journalled, said pulleys being rotatable about vertical axes of rotation 1 (Figure 3). The pulleys 2 function to guide a conveyor belt 3 which runs in a horizontal plane. The conveyor belt 3 may be a simple smooth belt 3, for example made of plastic material or rubber or the like material, which makes the construction a rather noiseless one.

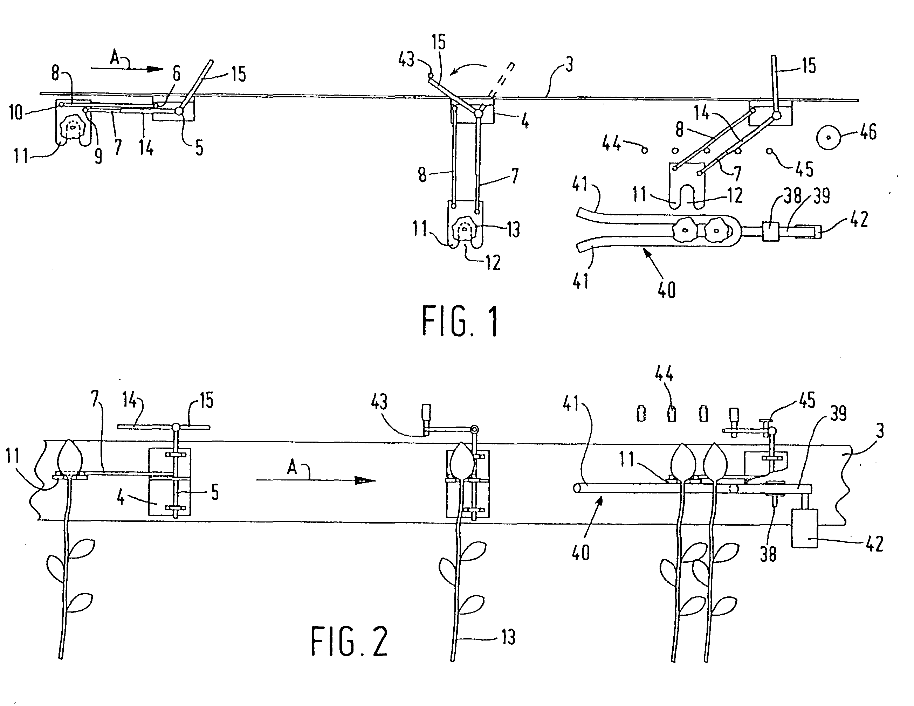

Supports 4 are secured to the conveyor belt in regularly spaced-apart relationship. The ends of two arms 7 and 8 are coupled to the supports 4 by means of vertically extending pivot pins 5 and 6. The ends of the arms 7 and 8 remote from the pivot pins 5 and 6 are coupled to a supporting means 11 by means of pivot pins 9 and 10 respectively extending parallel to the pivot pins 5 and 6, in which supporting means a slotted hole 12 is provided, said slotted hole being open at one end. The pivot pins 5, 6 and 9, 10 are located in the corner points of a parallelogram, as will be apparent in particular from Figures 1 and 3. As will furthermore be apparent in particular from Figures 2 - 4, the supporting means 11 are intended to support flowers 13, whereby every flower 13 can be suspended from a supporting means 11 by hand, by sliding the stem of the flower 13 into the slotted hole 12, in such a manner that the bud of the flower 13 will come to rest on top of the supporting means.

Furthermore two control arms 14 and 15 including an obtuse angle with each other, whose purpose will be explained in more detail hereafter, are secured to each pivot pin 5.

During operation the endless conveyor belt 3 is driven in the direction according to arrow A. During operation the flowers 13 are suspended from the supporting means 11 in a point located upstream of the pulley 2, to those supporting means 11 that are located near the upper part of the conveyor belt 3, seen in Figure 3.

A shaft 16 is provided near the pulley 2, said shaft being disposed at least substantially parallel to the axis of rotation 1 of said pulley 2 and being supported near its upper end by a tiltable journal 17 connected with the frame of the device, in such a manner that the shaft 16 is capable of pivoting movement near said journal 17, about an imaginary horizontal axis 18. Near its bottom end the shaft 16 is furthermore journalled in a tiltable journal 19, in such a manner that also here the shaft 16 is capable of pivoting movement about an imaginary axis 20 with respect to the journal 19.

Pulley 21 is secured to the shaft 16 between the ends of the shaft 16, said pulley 21 being coupled, by means of a crossed belt 22, to a pulley 23 secured to shaft 1, which rotates along with the pulley 2 during operation, therefore.

A pulley 24 is secured to the bottom end of the shaft 16. A further pulley 25, which is rotatable about an upwardly extending axis of rotation, is disposed in one plane with the pulley 24, said pulley 25 being supported by an arm 26 secured to the frame.

It will be apparent that the pulley 24 is pulled towards the pulley 25 by the belt 22.

Projecting arms 27 are secured to the journals 17 and 19. A connecting means 28 is coupled between the ends of the arms 27 remote from the journals 17 and 19, said connecting means being capable of pivoting movement with respect to the arms 27, about axes 29 and 30 extending parallel to the axes 18 and 20, which, together with the axes 18 and 20, are located in the corner points of a parallelogram.

A measuring vane 31 is secured to the bottom end of the lower arm 27, said measuring vane being located opposite a sensor 32 fixed to the frame.

During transport of the flowers supported by the supporting means 11 the stems of the flowers will move between the two pulleys 24 and 25 lying in one plane, as a result of which the pulley 24 will be pushed some distance away from the pulley 25, dependent on the thickness of the stem. It will be apparent that as a result of this also the distance between the measuring vane 31 and the sensor 32 will be changed, as a result of which the sensor will deliver a signal in accordance with the thickness of the stem.

Furthermore a number of sensors 33 are provided near the pulley 2, one sensor being located above the other, by means of which the length of the stem of a flower 13 is measured in a manner which is known per se. The measured thickness and/or length of the stem is used to programme a control mechanism of the device in such a manner, that each flower is delivered in a desired bundling station of a plurality of bundling stations arranged one behind the other along the conveyor belt 3, downstream of the pulley 2.

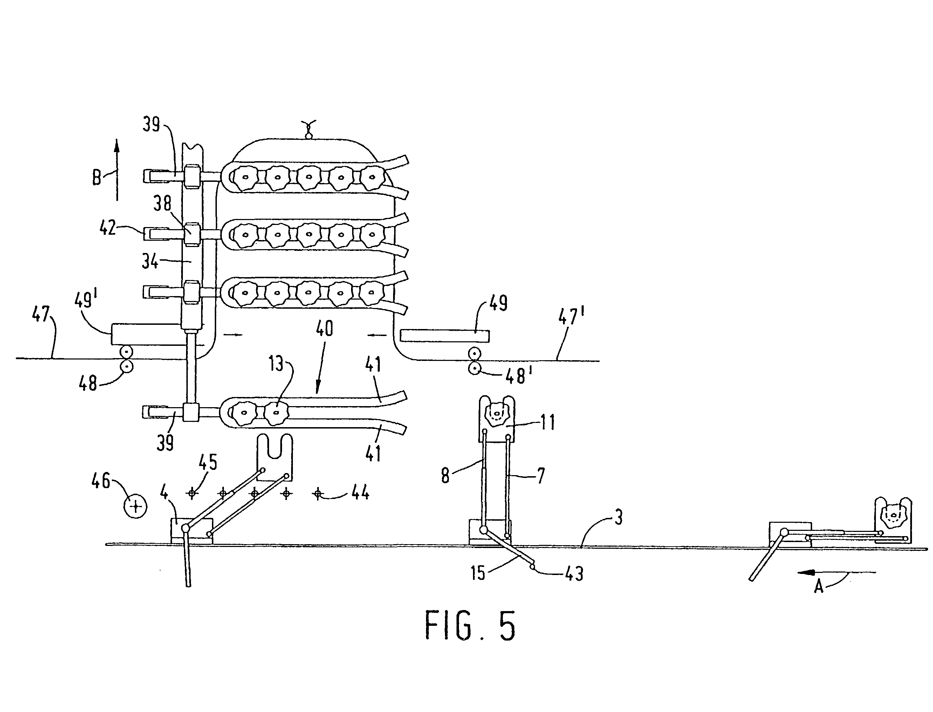

As is illustrated in particular in Figures 5 - 7, an endless conveyor belt 34 running in a vertical plane is disposed at each bundling station, said conveyor belt being passed over two pulleys 35, which are rotatable about horizontal axes 36. The axes 36 extend at least substantially parallel to the longitudinal direction of the conveyor belt 3, whereby the conveyor belt 34 extends perpendicularly to the longitudinal direction of the conveyor belt 3.

Regularly spaced-apart carriers 38 are secured to the conveyor belt 34. Horizontal axes 39 extending parallel to the pins 36 are journalled, in such manner as to be freely rotatable, in the ends of the carriers remote from the conveyor belt 34. A fork-shaped means 40 is secured to one end of each axis 39, said fork-shaped means being built up of two teeth 41 extending parallel to each other, whereby the free ends of said teeth remote from the pin 39 are slightly bent in a direction away from each other.

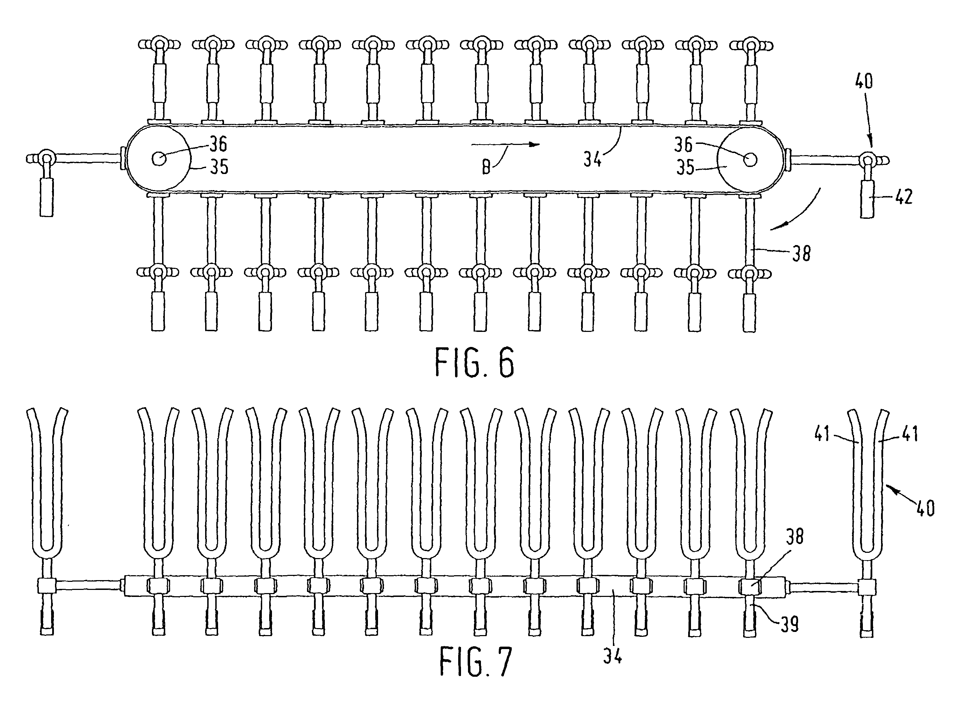

A weight 42 is secured to the other end of each axis 39. During operation the conveyor belt 34 will be driven in such a manner, that the upper part of the conveyor belt moves in a direction according to arrow B, seen in Figure 6. It will be apparent that when the movement of the fork-shaped means 40 effected as a result of the endless conveyor belt 34 being driven takes place, said fork-shaped means 40 will be kept in the horizontal position shown in Figure 6 at all times by the weights 42 secured to the axes 39, which project under the axes 39.

A vertically adjustable stop or sorting pin 43 (Figure 2) is disposed some distance upstream of each conveyor belt 34 forming part of a bundling station, seen in the direction of movement of the endless conveyor belt 3 in the direction according to arrow A. The sorting pin 43 is thereby adjustable between a first position shown in Figure 2, in which the sorting pin lies in the path of the control arm 15, and a second position, in which the sorting pin 43 lies outside the path of the control arm 15.

Furthermore a number of further vertically adjustable stops or sorting pins 44, four in the illustrated embodiment, are arranged in regularly spaced-apart relationship near each conveyor belt 34, close to the conveyor belt 3. Furthermore a fixedly disposed sorting pint 45 is provided downstream of said four vertically adjustable sorting pins 44. The distance between said sorting pin 45 and the sorting pin 44 located closest to said sorting pin 45 is equal to the distance between the sorting pins 44 mutually.

Furthermore a guide wheel 46 is disposed some distance downstream of the fixedly disposed sorting pin 45.

When a flower being displaced by means of the conveyor belt 3 is to be delivered in a certain bundling station, the sorting pin 43 or stop associated with said bundling station will be moved by means of the control mechanism of the device, from a position located outside the path of the control, arm 15 to the position shown in Figure 2, which is located in the path of the control arm 15. Consequently the control arm 15 will strike the respective sorting pin 43 and be pivoted by means of the sorting pin 43, from the position illustrated in dotted lines in the centre of Figure 1 to the position shown in full lines in the present Figure. As a result of this the supporting means carrying the flower in question will be pivoted by means of the parallelogram mechanism 5 - 10, from a position in which the supporting means is located close by the conveyor belt 3 to a position in which the supporting means is located some distance from the conveyor belt 1, whilst the arms 7 and 8 thereby extend at least substantially perpendicularly to the conveyor belt 3 (Figure 1).

The flower 13 supported by a supporting means 11 thus extended is then moved in a path being in line with the opening between the legs 41 of a fork-shaped means 40 located nearest the conveyor belt 3, approximately in a plane through the two axes 36 of the endless conveyor belt 34, therefore, as is illustrated in Figure 6.

As appears in particular from the right-hand part of Figure 2, the supporting means 11 is initially moved over the legs 41 of the respective fork-shaped means 40 thereby, so that the stem of the flower 13 in question is moved into the slot-shaped opening bounded by the legs 41 of the fork-shaped supporting means.

When it concerns a first flower placed in the respective fork-shaped supporting means, all pins 44 will have been kept in a retracted position, so that said pins will not be located in the path of movement of the control arm 14. At some point the control arm will come into contact with the fixed stop 45, which will result in some pivoting of the parallelogram mechanism supporting the supporting means 11, all this in such a manner, that the supporting means is pulled away from its position under the respective flower and the flower will come to rest on the legs 41 of the fork-shaped supporting means 40.

Then the control arm 14 will come into contact with the guide wheel 46, by means of which the arms 7 and 8 of the parallelogram mechanism supporting the supporting means 11 are caused to pivot back against the direction of movement of the conveyor belt 3, to a position in which the arms 7 and 8 extend at least substantially parallel to the longitudinal direction of the conveyor belt.

When a next flower is to be delivered to the fork-shaped supporting means 40, the above-described action will be practically identical, with this difference that in that case the sorting pin 44 located nearest the fixedly disposed stop pin 45 is moved to a position, in which said sorting pin 44 is located in the path of movement of the control arm 14 so that the supporting means 11 in question, which supports the second flower, will be retracted from the position located above the fork-shaped means 40 sooner than the supporting means that placed the first flower in the fork-shaped means 40. This goes on until five flowers (or more or fewer, if desired) have been placed in the fork-shaped means 40.

In practice it has become apparent that no springs or the like are required to keep the parallelogram mechanism supporting the supporting means 11 in the one or other desired position.

Since the parallelogram mechanism is furthermore designed such that the arms can be pivoted from the extended position of the supporting means 11 with respect to the belt, in a direction opposed to the direction of movement of the belt during operation, the supporting means will be able to move out easily when said supporting means comes into contact with an obstacle of some kind, so that the risk of jamming and/or damage being caused to parts of the machine is prevented.

When a desired number of flowers has been delivered to a fork-shaped means, the conveyor belt 34 will be moved one step in the direction according to arrow B, so that the fork-shaped means loaded with flowers will be moved out of the path of movement of flowers supported by extended supporting means 11, and an empty fork-shaped means is positioned in said path of movement so as to be filled with flowers again.

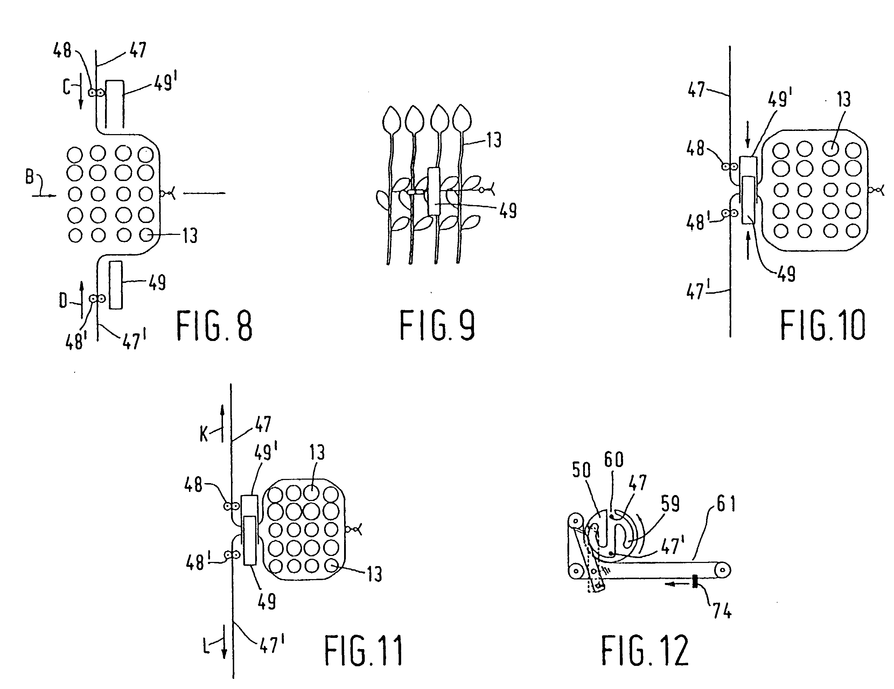

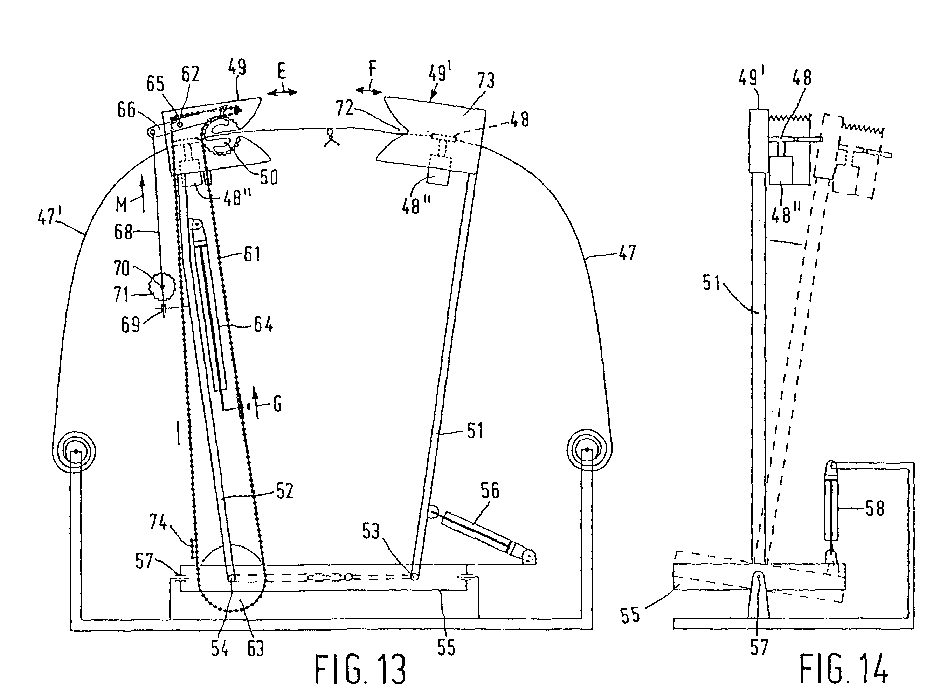

For bundling flowers 13 supported by a number of fork-shaped means 40 located side by side use is made of two binding strings 47 and 47', which can be moved in opposite directions (Figure 8) according to arrow C or D by means of rollers 48 and 48', whereby at least one of the rollers 48 and one of the rollers 48' can be driven by means of a reversible motor 48'' (Figure 13). As will furthermore be apparent from Figure 8, the ends of the strings 47 and 47' directed towards each other are connected together as a result of said ends being wound around one another a number of turns.

From Figures 5, 8, 10 and 11 it will furthermore be apparent that the interconnected ends of the strings 47 and 47' will gradually be carried along by the flowers supported by means of the fork-shaped means 40, in the direction of movement of the fork-shaped means according to arrow B.

When a desired number of flowers supplied by a number of fork-shaped means are located between the ends of the binding strings 47 and 47' being carried along, the flowers supported by four fork-shaped means in the illustrated case, the binding strings 47 and 47' will be moved together by carrier means 49 and 49' at the side of the bunch of flowers remote from the interconnected ends of the binding strings, and connected together again at that location by twisting the parts of the binding strings 47 and 47' together a number of turns by means of a mechanism yet to be described in more detail hereafter, said mechanism comprising a rotatable disc 50 (Figure 12).

As is illustrated in more detail in Figure 13, the two carrier means 48 and 49 are secured to the upper ends of arms 51 and 52 respectively, which are pivotally connected to a frame part 55 near their bottom ends, by means of horizontal pivot axes 53 and 54 respectively. The arms 51 and 52 can thereby be pivoted towards or away from each other about the pivot pins 53 and 54 by means of a setting cylinder 56, as is indicated by means of arrows E and F.

The frame part 55 is pivotally connected to the frame of the device by means of a pivot axis 57 extending perpendicularly to the pivot axes 53 and 54. The frame part 55 can thereby be pivoted about the pivot axis 57 with respect to the frame of the device by means of a setting cylinder 58, as is in particular diagrammatically illustrated in Figure 14.

The rotatable disc 50 is journalled in the carrier means 49, in such a manner that said disc is capable of rotating movement with respect to the carrier means, about its axis extending parallel to the axes 53 and 54. As appears in particular from Figure 12, the disc 50 is formed with an S-shaped passage 59, which is accessible from the outside of the disc 50 via an entrance aperture 60.

The disc 50 is provided with teeth at its outer circumference, which teeth are in engagement with a chain 61 guided along part of the circumference of the disc 50. The chain 61 is furthermore guided along two guide wheels 62 supported by the carrier means 48 and is furthermore passed over a chain wheel 63, which is rotatable about the axis 54.

The chain 61 can be moved to and fro, as is indicated by arrow G, by means of a setting cylinder 64 provided between the chain 61 and the arm 52. The construction is thereby such that on the outgoing stroke of the setting cylinder 64 the disc 50 will be rotated in anticlockwise direction, seen in Figure 13, about its axis of rotation a number of times, whilst the disc 50 will be rotated the same number of times in clockwise direction on the ingoing stroke of the setting cylinder 64.

A lever 66 is coupled to the carrier means 48 by means of a axis 65 extending parallel to the axis of rotation of the disc 50. The end of the lever 66 located near the disc 50 is provided with a knife edge 67. The other end of the lever 66 is coupled to one end of a coupling rod 68, which is accommodated in a journal 69 secured to the arm 52 so as to be movable in its longitudinal direction. A chain wheel 71, which is rotatable about an axis of rotation 70 extending parallel to the pivot axis 54, is connected with the coupling rod 69 by means of a friction coupling.

When flowers are moved in the direction according to arrow B by the fork-shaped means, the interconnected ends of the binding strings 47 and 47', which have been moved in steps by means of the rollers 48 and 48', will be carried along, whereby the binding string 47' is pushed into the S-shaped passage 59 via the aperture 60. The binding string 47 is pushed into V-shaped notches 72, which are formed by two plates 73 forming part of the carrier means 49' and extending parallel to each other, between which the carrier means 49 can at least partly be accommodated when the carrier means 49 and 49' move towards each other. When a desired number of flowers has been supplied, the two carrier means 49 and 49' and the rollers 48 and 48' supported by said carrier means and the disc 50 can be moved towards each other. The path of movement of the carrier means 49 and 49' can thereby be adjusted to the size of the bunch of flowers to be made by pivoting of the arms 51 and 52 supporting the carrier means 49 and 49' about the pivot axis 57.

When the carrier means 49 and 49' move towards each other, also the binding string 47 will be moved into the S-shaped passage 59 via the aperture 60, as is indicated in Figure 12. Thereupon the binding strings can be pulled tight around the stems of the flowers to be bunched, by driving the driven rollers 48 and 48' in such a manner, that the binding strings are moved in a direction according to arrows K and L respectively (Figure 11).

When the binding strings have been pulled sufficiently tight the setting cylinder 64 may be actuated, as a result of which the disc 50 is rotated and the parts of the binding strings located near said disc 50, in the S-shaped passage 59, are twisted together so as to attach said binding strings together.

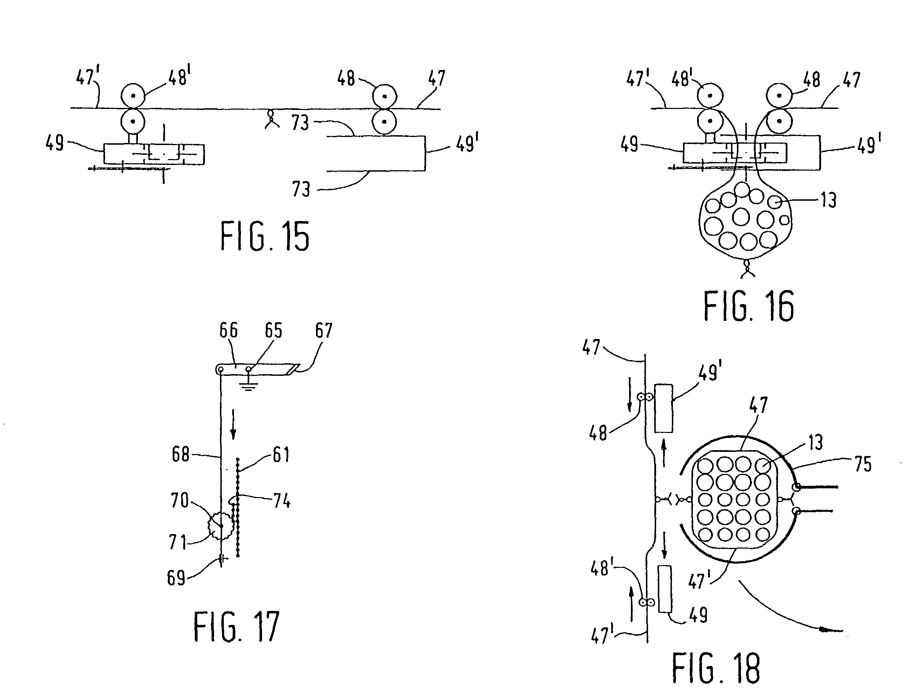

Upon movement of the chain 61 by means of the setting cylinder 64 a chain piece 74 secured to the chain 61 will come into contact with the chain wheel 71 at some point. Initially this will result in movement of the rod 68 in the direction according to arrow M. Accordingly also the lever 66 forming a knife will be pivoted about the axis 65 in clockwise direction, seen in Figure 13, as a result of which the knife edge 67 is pivoted in the direction of the parts of the binding strings 47 and 47' which are twisted together by means of the disc 50. Accordingly a cutting through of the interconnected parts of the binding strings 43 and 44 is effected during a last revolution of the disc 50 for twisting the string parts together, whilst the rod 68 cannot be moved in the direction according to arrow M any further because of the resistance encountered, and the chain piece 74 will rotate the chain wheel 71 whilst actuating the respective friction coupling in order to be able to pass the chain wheel, as is indicated in Figure 17.

After the binding strings 47 and 47' have thus been connected together and the connection made has been cut through, the setting cylinder 64 will move back the chain 61 to the initial position shown in Figure 13. Also the disc 50 is thereby rotated back to the initial position shown in Figure 13. Furthermore the chain piece 74 will first carry back the chain wheel 71 and the rod 68 connected therewith to the initial position shown in Figure 13, whilst the chain piece 73 will pass the chain wheel 71 after reaching said initial position, whereby the chain wheel 71 will be rotated against the action of the friction coupling connected therewith.

Furthermore the arms 51 and 52 will be pivoted back from the position in which the arms are pivoted together to the position shown in Figure 13.

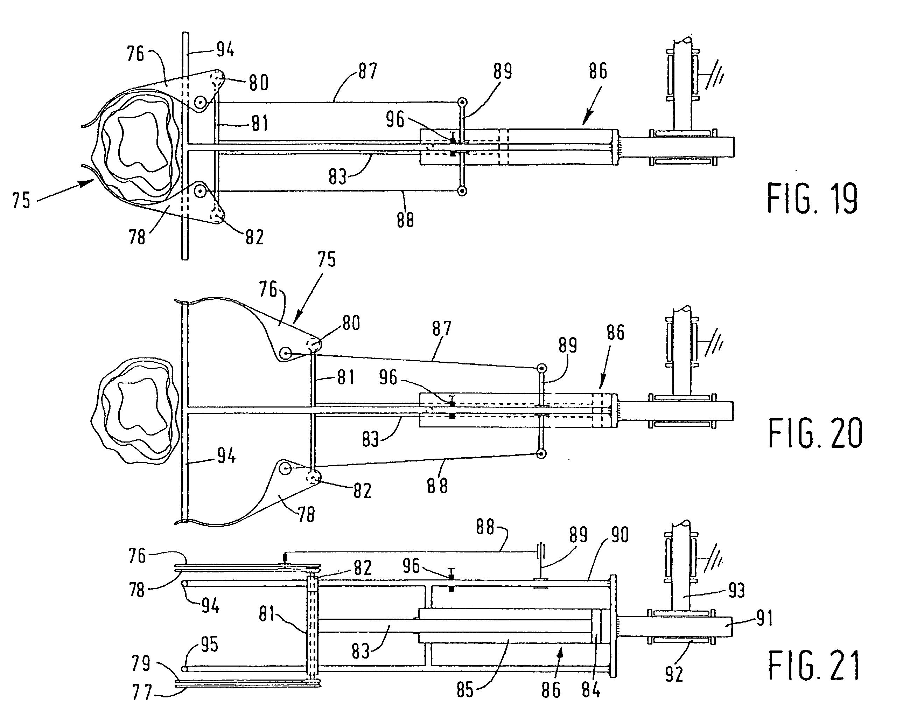

As is diagrammatically indicated in Figure 18, a bunch of flowers bundled in this manner can be grabbed by grab means 75 in order to be discharged. The construction of said grab means is diagrammatically illustrated in more detail in Figures 19 - 21.

The grab means comprises two jaws 76 and 77, one jaw being located above the other, and two jaws 78 and 79, one jaw being located above the other. The jaws 76 and 77 are pivotally coupled to one end of a carrier 81 by means of a vertical axis 80. The jaws 78 and 79 are pivotally coupled to another end of the carrier 81 by means of a vertical pivot axis 82. The carrier 81 is connected to a piston rod 83, which is with one end secured to a piston 84, which is located in a cylinder housing 85 of a horizontally disposed setting cylinder 86.

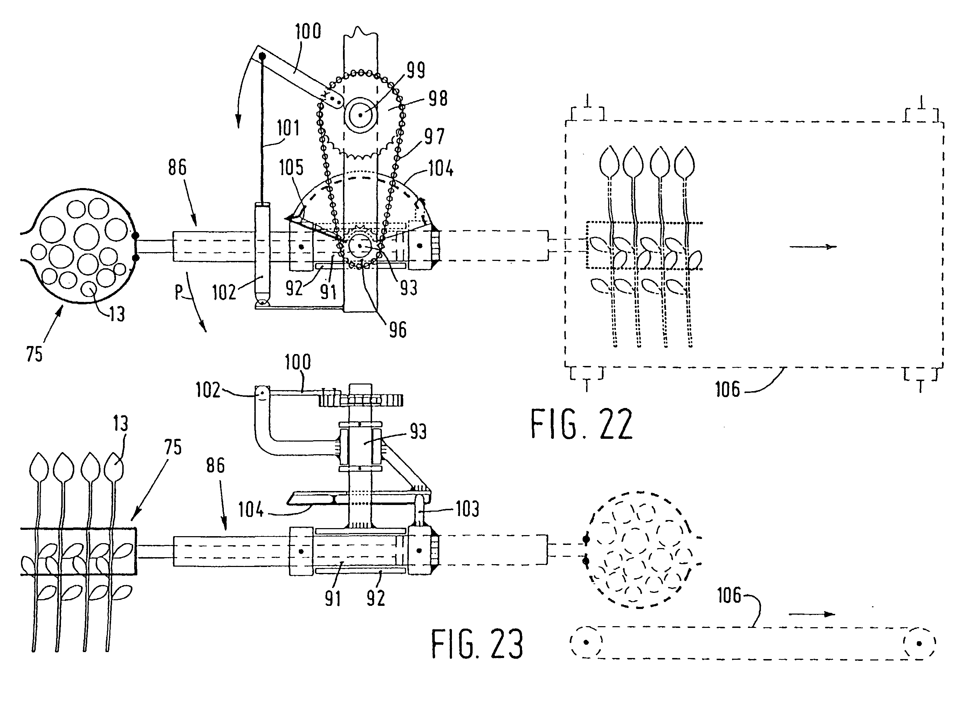

The ends of coupling rods 87 and 88 are pivotally coupled to the jaws 76, 77 and 78, 79 respectively at some distance from the pivot axes 80 and 82. The other ends of the coupling rods 87 and 88 are pivotally coupled to a sliding piece 89. The sliding piece 89 is capable of sliding movement along a frame part 90 supporting the setting cylinder 86, said frame part being secured to a horizontally extending shaft 91, which is journalled in a bush 92. The bush 92 is secured to vertical shaft 93, which is rotatably journalled in the frame. The construction of the support of the frame part 90 by means of two shafts 91 and 93 will be explained in more detail hereafter with reference to Figures 22 and 23.

Two pusher rods 94 and 95, one being located above the other, extending perpendicularly to the longitudinal direction of the setting cylinder 86, are located at the end of the frame part 90 remote from the shaft 91.

Upon telescoping of the setting cylinder 86, that is when the piston rod 83 moves from the position shown in Figure 20 to the left, seen in Figures 19 - 21, the sliding piece 89 will strike a stop means 96 at some point, which stop means is movable with respect to the frame part 90, in the direction of movement of the sliding piece 89, and which can be locked in a desired position. When the sliding piece 89 strikes the stop 96, the jaws 76, 77 and 78, 79 will pivot towards each other upon further movement of the piston rod to the left, seen in Figures 19 - 21, from the position shown in Figure 20 to the position shown in Figure 19, so that the jaws grab the stems of a bundled bunch of flowers under the flower buds. By adjusting the stop 96 the movement of the jaws towards each other may be varied, this in accordance with the thickness of the bunches to be handled.

Upon withdrawal of the piston rod the jaws 76, 77 and 78, 79 will be pivoted from the closed position shown in Figure 19 to the position shown in Figure 20, whereby the jaws are also simultaneously withdrawn with respect to the pusher rods 94 and 95, so that the bundled bunch of flowers is released from the jaws, as is illustrated in Figure 20.

As is illustrated in more detail in Figures 22 and 23, a chain wheel 96 is secured to the shaft 93. The chain wheel 96 is coupled to a further chain wheel 98 by means of a chain 97, said further chain wheel 98 being rotatable about a shaft 99 secured to the frame of the device. An arm 100 is secured to the chain wheel 98. Instead of a chain transmission also a toothed belt transmission may be used. Coupled to the free end of the arm 100 is a piston rod 101 of a setting cylinder 102 secured to the frame of the device. It will be apparent that by actuating the setting cylinder 102 the chain wheel 98 and therewith the chain wheel 96 with the shaft 93 and the grab means 75 supported by means of said shaft can be pivoted to and fro, through an angle of 180° in the illustrated embodiment.

Upon pivoting of the grab means 75 from the position illustrated in full lines in the direction according to arrow P (Figure 22) the flowers bundled into a bunch are moved from the fork-shaped means 40 supporting the flowers. Said fork-shaped means 40 can freely adjust themselves thereby, by pivoting about the axes 39, which prevents damage to the flowers.

Furthermore a pin 103 extending transversely to the shaft 91 is secured to said shaft 91, said pin cooperating with a guide plate 104 secured to the frame.

Initially the free end of the pin 103 extends along a part of the guide plate 104 which extends concentrically about the axis of the shaft 93. Shortly before reaching the end position of the grab means 75, which is illustrated in dotted lines in Figures 22 and 23, the free end of the pin 103 moves into an opening 105 provided in the guide plate 104, said opening being configured such that upon further pivoting of the grab means 75 to its end position illustrated on the right in Figures 22 and 23 the pin 103 and with it the shaft 91 connected with the pin 103 is pivoted about its central axis through an angle of 90° within the bush 92. The bunch of flowers grabbed in vertical position by the grab means is thus moved to a horizontal position, for example above a discharge conveyor 106 or the like. By subsequently opening the grab means in the above-described manner the bunch of flowers can be delivered onto the discharge conveyor and be discharged.

## Claims

1. A device for bundling flowers (13), provided with means (40) by which a number of flowers (13) can be arranged in close relationship, and also with means for providing binding means (47, 47') around the flower stems so as to form a joined bunch of flowers, **characterized in that** said device is provided with supply means (48, 48') for supplying two binding strings (47, 47') and with a pair of carrier means (49, 49') for carrying along the string, which are capable of movement towards and away from each other and by means of which the two binding strings (47, 47') can be moved towards each other, whilst one of said carrier means supports a rotatable disc (50), which is provided with passages (59, 60) through which the binding string can be passed.

2. A device according to claim 1, **characterized in that** said rotatable disc (50) is provided with a substantially S-shaped passage (59), which is accessible from the outside of the disc (50).

3. A device according to claim 1 or 2, **characterized in that** said disc (50) is rotatably supported in a carrier means (49) and can be driven by means of a drive chain (61) partially extending over the toothed circumference of the disc (50), and being capable of reciprocating movement.

4. A device according to claim 3, **characterized in that** a pivotal knife (66) is coupled to the carrier means (49) supporting the disc (50), which knife (66) can be pivoted by means of said drive chain (61).

5. A device according to claim 4, **characterized in that** a carrier part (74) is provided on said drive chain, which cooperates with a chain wheel (71), which is connected, via a friction coupling, with a coupling rod (68) coupled to said pivotal knife (66).

6. A device according to any one of the preceding claims, **characterized in that** said carrier means (49,49') are pivotal and adjustable in a direction at least substantially parallel to the direction in which the flowers are supplied in order to be bundled.

7. A device according to any one of the preceding claims, provided with grab means (75) for grabbing a bunch of flowers (13), said grab means (75) being capable of pivoting movement, both about an at least substantially vertical axis (98) and about an at least substantially horizontal axis (91).

8. A device according to claim 7, **characterized in that** said grab means (75) comprises to pairs of jaws (76-79), which are pivotally coupled to a carrier (81) and which are furthermore coupled to a sliding piece (89), which can be moved by means of a setting cylinder (86), whilst means (96) are provided for regulating the stroke of said sliding piece.

9. A device according to claim 8, **characterized in that** pusher rods (94, 95) are arranged between said jaws (76-79).

10. A device according to any one of the claims 7-9, **characterized in that** said grab means (75) is connected with an at least substantially horizontally extending shaft (91), which is rotatably journalled in a support (92), which is pivotally journalled in the frame of the device by means of a vertical shaft (93).

11. A device according to claim 10, **characterized in that** a projecting finger (103) is connected with said at least substantially horizontally extending shaft (91), said finger cooperating with a guide plate (104) so as to cause the horizontal shaft (91) to pivot through 90° upon pivoting of said vertical shaft (93) with respect to the frame.

## Patentansprüche

1. Vorrichtung zum Bündeln von Blumen (13), ausgestattet mit einer Einrichtung (40), mit der eine Anzahl von Blumen (13) in enger Lagebeziehung zueinander angeordnet werden kann, außerdem ausgestattet mit einer Einrichtung zum Bereitstellen eines Bindemittels (47, 47') um die Blumenstile herum, um einen zusammenhängenden Bund Blumen zu bilden, **dadurch gekennzeichnet, daß** die Vorrichtung mit einer Zuführeinrichtung (48, 48') zum Zuführen von zwei Bindeschnüren (47, 47') und mit einem Paar Trägereinrichtungen (49, 49') zum Tragen der Schnur ausgestattet ist, ausgelegt für eine Bewegung aufeinander zu und voneinander weg, wodurch die beiden Bindeschnüre (47, 47') aufeinander zu bewegt werden können, während eine der Trägereinrichtungen eine Drehscheibe (50) haltert, die mit Kanälen (59, 60) ausgestattet ist, durch die hindurch die Bindeschnur laufen kann.

2. Vorrichtung nach Anspruch 1, **dadurch gekennzeichnet, daß** die Drehscheibe (50) mit einem im wesentlichen S-förmigen Kanal (59) ausgestattet ist, der von außerhalb der Scheibe (50) zugänglich ist.

3. Vorrichtung nach Anspruch 1 oder 2, **dadurch gekennzeichnet, daß** die Scheibe (50) drehbar in einer Trägereinrichtung (49) gelagert ist und mit Hilfe einer Antriebskette (61) antreibbar ist, die sich teilweise über den gezahnten Umfang der Scheibe (50) erstreckt und für eine Hubbewegung ausgelegt ist.

4. Vorrichtung nach Anspruch 3, **dadurch gekennzeichnet, daß** ein Schwenkmesser (66) mit der die Scheibe (50) halternden Trägereinrichtung (49) gekoppelt ist, wobei das Messer (66) mit Hilfe der Antriebskette (61) geschwenkt werden kann.

5. Vorrichtung nach Anspruch 4, **dadurch gekennzeichnet, daß** ein Trägerteil (74) an der Antriebskette vorgesehen ist die einem Kettenrad (71) zusammenwirkt, das über eine Reibungskupplung mit einer mit dem Schwenkmesser (66) gekoppelten Verbindungsstange (68) gekoppelt ist.

6. Vorrichtung nach einem der vorhergehenden Ansprüche, **dadurch gekennzeichnet, daß** die Trägereinrichtung (49, 49') schwenkbar und in einer Richtung im wesentlichen etwa parallel zu der Richtung einstellbar ist, in der die Blumen zum Bündeln angeliefert werden.

7. Vorrichtung nach einem der vorhergehenden Ansprüche, ausgestattet mit einer Greifereinrichtung (75) zum Ergreifen eines Bunds Blumen (13), wobei die Greifereinrichtung (75) für eine Schwenkbewegung ausgelegt ist, sowohl um eine zumindest im wesentlichen vertikale Achse (98) als auch um eine zumindest im wesentlichen horizontale Achse (91).

8. Vorrichtung nach Anspruch 7, **dadurch gekennzeichnet, daß** die Greifereinrichtung (75) ein Paar Klauen (76-79) aufweist, die schwenkbar mit dem Träger (81) gekoppelt sind, und die darüber hinaus mit einem Gleitstück (89) gekoppelt sind, welches mit Hilfe eines Stellzylinders (86) bewegbar ist, während Mittel (96) vorgesehen sind zum Regulieren des Hubs des Gleitstücks.

9. Vorrichtung nach Anspruch 8, **dadurch gekennzeichnet, daß** zwischen den Klauen (76-79) Drückerstangen (94, 95) angeordnet sind.

10. Vorrichtung nach einem der Ansprüche 7 bis 9, **dadurch gekennzeichnet, daß** die Greifereinrichtung (75) mit einer zumindest in etwa horizontal verlaufenden Welle (91) verbunden ist, die drehbar in einer Halterung (92) gelagert ist, die ihrerseits drehbar in dem Gestell der Vorrichtung mit Hilfe einer vertikalen Welle (93) gelagert ist.

11. Vorrichtung nach Anspruch 10, **dadurch gekennzeichnet, daß** mit der zumindest im wesentlichen sich horizontal erstreckenden Welle (91) ein vorstehender Finger (103) verbunden ist, der mit einer Führungsplatte (104) derart zusammenwirkt, daß bei Verschwenken der vertikalen Welle (93) gegenüber dem Gestell die horizontale Welle (91) um 90° gedreht wird.

## Revendications

1. Dispositif pour botteler des fleurs (13), doté de moyens (40) par lesquels un nombre de fleurs (13) peuvent être réunies, et également de moyens pour disposer des moyens d'attache (47, 47') autour des tiges de fleurs afin de former un bouquet lié de fleurs, **caractérisé en ce que** ledit dispositif est doté de moyens de distribution (48, 48') pour distribuer deux ficelles d'attache (47, 47') et d'une paire de moyens de transport (49, 49') pour transporter la ficelle, qui sont adaptés à se rapprocher et s'éloigner l'un de l'autre et au moyen desquels les deux ficelles d'attache (47, 47') peuvent être rapprochées, tandis que l'un desdits moyens de transport supporte un disque rotatif (50), qui est doté de passages (59, 60) par lesquels la ficelle d'attache peut être passée.

2. Dispositif selon la revendication 1, **caractérisé en ce que** ledit disque rotatif (50) est doté d'un passage sensiblement en forme de S (59), qui est accessible depuis l'extérieur du disque (50).

3. Dispositif selon la revendication 1 ou 2,
**caractérisé en ce que** ledit disque (50) est supporté en rotation dans un moyen de transport (49) et peut être entraîné au moyen d'une chaîne d'entraînement (61) s'étendant partiellement sur la circonférence dentée du disque (50), et étant adaptée à un mouvement de va-et-vient.

4. Dispositif selon la revendication 3, **caractérisé en ce qu'**un couteau pivotant (66) est couplé au moyen de transport (49) supportant le disque (50), lequel couteau (66) peut être amené à pivoter au moyen de ladite chaîne d'entraînement (61).

5. Dispositif selon la revendication 4, **caractérisé en ce qu'**une partie de transport (74) est prévue sur ladite chaîne d'entraînement, qui coopère avec une roue à chaîne (71), qui est reliée, via un accouplement à friction, avec une tige d'accouplement (68) couplée audit couteau pivotant (66).

6. Dispositif selon l'une quelconque des revendications précédentes, **caractérisé en ce que** lesdits moyens de transport (49, 49') peuvent pivoter et être réglés dans une direction au moins sensiblement parallèle à la direction dans laquelle les fleurs sont distribuées afin d'être bottelées.

7. Dispositif selon l'une quelconque des revendications précédentes, doté de moyens de préhension (75) pour saisir un bouquet de fleurs (13), lesdits moyens de préhension (75) étant adaptés à pivoter à la fois autour d'au moins un axe sensiblement vertical (98) et autour d'au moins un axe sensiblement horizontal (91).

8. Dispositif selon la revendication 7, **caractérisé en ce que** lesdits moyens de préhension (75) comprennent deux paires de mâchoires (76 à 79), qui sont couplées à un support (81) de manière à pivoter et qui sont en outre couplées à une pièce de glissement (89), qui peut être déplacée au moyen d'un cylindre d'ajustement (86), tandis qu'un moyen (96) est prévu pour régler la course de ladite pièce de glissement.

9. Dispositif selon la revendication 8, **caractérisé en ce que** des poussoirs (94, 95) sont disposés entre lesdites mâchoires (76 à 79).

10. Dispositif selon l'une quelconque des revendications 7 à 9, **caractérisé en ce que** lesdits moyens de préhension (75) sont reliés avec au moins un arbre (91) s'étendant sensiblement horizontalement, qui est tourillonné en rotation dans un support (92), qui est tourillonné en pivotement dans le châssis du dispositif au moyen d'un arbre vertical (93).

11. Dispositif selon la revendication 10, **caractérisé en ce qu'**un doigt en saillie (103) est relié avec ledit au moins un arbre (91) s'étendant sensiblement horizontalement, ledit doigt coopérant avec une plaque de guidage (104) de manière à amener l'arbre horizontal (91) à pivoter sur 90° lors du pivotement dudit arbre vertical (93) par rapport au châssis.
